# EUROPÄISCHE PATENTSCHRIFT

(11) **EP 3 347 246 B1**
(45) Veröffentlichungstag und Bekanntmachung des Hinweises auf die Patenterteilung: **18.11.2020**
(21) Anmeldenummer: 16760009.7
(22) Anmeldetag: 24.08.2016
(51) Int. Cl.: B60R 25/24

(54) **VERFAHREN UND ANORDNUNG ZUM LOKALISIEREN EINER TRAGBAREN FUNKEINHEIT**
METHOD AND ARRANGEMENT FOR LOCALIZING A PORTABLE RADIO UNIT
PROCÉDÉ ET SYSTÈME DE LOCALISATION D'UNE UNITÉ RADIO PORTABLE

(30) Priorität: 11.09.2015 DE 102015217413
(43) Veröffentlichungstag der Anmeldung: 18.07.2018
(73) Patentinhaber: Continental Automotive GmbH, 30165 Hannover (DE)
(72) Erfinder: HERMANN, Stefan, 91077 Neunkirchen am Brand (DE)
(86) Internationale Anmeldenummer: PCT/EP2016/069947
(87) Internationale Veröffentlichungsnummer: WO 2017/042030

(56) Entgegenhaltungen:
- EP-A1- 1 721 793
- DE-A1-102011 088 917
- DE-A1-102013 227 204
- DE-B3-102012 216 843
- DE-C1- 19 738 323
- US-B2- 6 906 612

## Beschreibung

Die vorliegende Erfindung betrifft ein Verfahren zur Lokalisierung einer tragbaren Funkeinheit innerhalb eines vorbestimmten Bereichs eines Fahrzeugs. Ferner betrifft sie eine Anordnung zum Lokalisieren der tragbaren Funkeinheit.

In heutigen Fahrzeugen gehören Startsysteme bzw. Wegfahrsperren als Teil von Diebstahlschutzeinrichtung zur Standardausrüstung. Dabei wird mittels einer Funkkommunikation eine Authentifizierung durchgeführt, bei der an eine tragbare Funkeinheit (insbesondere einen Identifikationsgeber eines Benutzers), die sich im Innenraum des Fahrzeugs befindet, ein Anfragesignal gesendet wird, woraufhin die tragbare Funkeinheit einen Code zurück an eine fahrzeugseitige Auswerteeinrichtung sendet. Diese wird die Wegfahrsperre freigeben und eine Motorstartfreigabe erteilen, wenn der von der tragbaren Funkeinheit übertragene Code gleich einem Sollcode ist.

Neben derartigen gerade beschriebenen Startsystemen für Fahrzeuge gibt es auch Zugangssysteme, um einen unbefugten Zutritt zu einem Fahrzeug zu verhindern. Bei sogenannten passiven Zugangssystemen oder Zugangsanordnungen werden zunächst von einer ersten Kommunikationseinrichtung des Fahrzeugs in regelmäßigen Zeitabständen Anfragesignale einer bestimmten Stärke ausgesendet, um zu überprüfen, ob sich eine tragbare Funkeinheit (ein mobiler Identifikationsgeber eines Benutzers) in einem vorbestimmten Bereich bzw. Erfassungsbereich des Fahrzeugs oder um das Fahrzeug befindet. Nähert sich die tragbare Funkeinheit dem Fahrzeug und kann schließlich dessen Anfragesignale empfangen, so wird sie auf den Empfang eines Anfragesignals antworten, um einen Authentifizierungsvorgang einzuleiten. Dabei werden Daten ausgetauscht, in denen letztendlich die tragbare Funkeinheit seinen Authentifizierungscode dem Fahrzeug übermittelt. Bei erfolgreichem Überprüfen des Authentifizierungscodes ist es dann möglich, dass ein Benutzer, der sich direkt am Fahrzeug befindet, durch Betätigen eines Türgriffs ein Entriegeln der entsprechenden Fahrzeugtür oder aller Fahrzeugtüren erzielt. Da hier kein aktives Betätigen eines mechanischen oder elektrischen Identifikationsgebers bzw. Schlüssels durch einen Benutzer vorgenommen werden muss, wird diese Art der Zugangsberechtigung auch als passive Zugangsberechtigungsprüfung und die entsprechenden Zugangsberechtigungssysteme als passive elektronische Zugangsberechtigungssysteme (kurz: passive Zugangsanordnungen) bezeichnet.

Wie gerade erwähnt, kann eine tragbare Funkeinheit bzw. ein mobiler Identifikationsgeber eines Benutzers sowohl für eine Motorstartfreigabe als auch im Rahmen einer passiven Zugangsanordnung beteiligt sein. Dabei soll jedoch eine Motorstartfreigabe jedoch nur bei einer im Innenbereich befindlichen tragbaren Funkeinheit ermöglicht werden, während eine Türentriegelung im Rahmen einer Zugangsanordnung nur bei einer im Außenbereich befindlichen tragbaren Funkeinheit ermöglicht werden soll.

Die Druckschrift DE 197 38 323 C1 offenbart ein Verfahren zum Lokalisieren eines einen Transponder enthaltenen Freigabebauteils in einem Innenraum des Fahrzeugs für eine Motor-Startfreigabe. Dabei werden zumindest zwei Funksignale von einer fahrzeugseitigen Position im Innenbereich des Fahrzeugs ausgesendet, deren Feldstärke am Ort eines den Transponder enthaltenen Freigabebauteils gemessen und anhand der Auswertung der Feldstärken der Ort des den Transponder enthaltenden Freigabebauteils bestimmt. Ein Frequenzbereich der jeweiligen Funksignale ist nicht genannt.

Die Druckschrift DE 10 2012 216843 B3 offenbart eine Zugangsanordnung für ein Fahrzeug, bei der eine fahrzeugseitige Sende-/Empfangseinrichtung in bestimmten Zeitintervallen Anfragesignale aussendet und in Abhängigkeit der Anzahl der empfangenen Anfragesignale die identifikationsgeberseitige Sende-/Empfangseinrichtung ihre Empfindlichkeit ändert. Bei der US6906612B werden keine Hochfrequenzsignale benutzt. Bei der DE102013227204A werden beide Hochfrequenzsignale aus dem Innenbereich des Fahrzeugs gesendet.

Es ist daher die Aufgabe der vorliegenden Erfindung eine einfache Möglichkeit zu schaffen, eine tragbare Funkeinheit in einem vorbestimmten Bereich eines Fahrzeugs zu lokalisieren.

Diese Aufgabe wird durch die Gegenstände der unabhängigen Ansprüche gelöst. Vorteilhafte Ausgestaltungen sind Gegenstand der Unteransprüche.

Gemäß einem ersten Aspekt der Erfindung wird ein Verfahren zum Lokalisieren einer tragbaren Funkeinheit eines Benutzers innerhalb eines vorbestimmten Bereichs bzw. Erfassungsbereichs eines Fahrzeugs mit folgenden Schritten geschaffen:
Zunächst wird ein erstes Funksignal von einer fahrzeugseitigen Position im Außenbereich des Fahrzeugs ausgesendet, dies kann durch eine erste fahrzeugseitige Funkeinrichtung im Außenbereich des Fahrzeugs geschehen. Des Weiteren wird ein zweites Funksignal von einer fahrzeugseitigen Position im Innenbereich des Fahrzeugs ausgesendet. Dies kann durch eine zweite fahrzeugseitige Funkeinrichtung im Innenbereich des Fahrzeugs geschehen. Schließlich werden Werte von einer jeweiligen gemessenen Empfangsfeldstärke des ersten und des zweiten Funksignals am Ort der tragbaren Funkeinheit empfangen. Dies kann durch eine fahrzeugseitige Empfangseinrichtung geschehen. Es ist auch denkbar, anstelle der Werte der jeweiligen gemessenen Empfangsfeldstärken des ersten und des zweiten Funksignals am Ort der tragbaren Funkeinheit einen oder mehrere daraus abgeleitete Werte zu empfangen. Beispielsweise ist es denkbar, einen Differenzwert der jeweiligen Werte der gemessenen Empfangsfeldstärke zu empfangen. Des Weiteren wird der Ort der tragbaren Funkeinheit anhand eines Vergleichs der Werte der jeweiligen gemessenen Empfangsfeldstärken ermittelt. Dies kann durch eine fahrzeugseitige Auswerteeinrichtung geschehen. Durch die Verwendung von zwei Funksignalen, eines aus dem Außenbereich und eines aus dem Innenbereich wird sichergestellt, dass egal, wo sich die tragbare Funkeinheit befindet (im Außenbereich oder im Innenbereich), eines der Funksignale eine höhere Feldstärke am Ort der tragbaren Funkeinheit aufweist und das andere eine niedrigere Feldstärke. Dies ist bedingt durch eine Dämpfung der Feldstärke eines Funksignals durch die Fahrzeugkarosserie, die den Außenbereich und den Innenbereich voneinander trennt. Befindet sich beispielsweise die tragbare Funkeinheit im Innenbereich des Fahrzeugs (in der Fahrgastzell), so wird die Dämpfung der Feldstärke des zweiten Funksignals geringer sein als die Dämpfung der Feldstärke des ersten Funksignals. Beim Vergleich der beiden Funksignale, und insbesondere in Kenntnis welches Funksignal aus dem Innenbereich des Fahrzeugs ausgesendet wurde und welches aus dem Außenbereich des Fahrzeugs ausgesendet wurde, kann darauf geschlossen werden, dass im gerade erwähnten Beispiel sich die tragbare Funkeinheit im Innenbereich des Fahrzeugs befindet, da dessen durch die tragbare Funkeinheit gemessene Feldstärke größer als die gemessene Feldstärke des Funksignals aus dem Außenbereich ist. Somit wird eine einfache Möglichkeit der Lokalisierung der tragbaren Funkeinheit ermöglicht.

Gemäß einer Ausgestaltung des Verfahrens liegen die jeweiligen Sendefeldstärken des ersten und des zweiten Funksignals in dergleichen dezimalen Größenordnung. Insbesondere sind sie identisch. Auf diese Weise ist gewährleistet, dass eine entsprechende Dämpfung durch die Fahrzeugkarosserie von einem der beiden Funksignale um einen ausreichenden Betrag gegeben ist, um eine zuverlässige Unterscheidung bzw. einen Vergleich der Werte der jeweiligen gemessenen Empfangsfeldstärken und somit eine zuverlässige Lokalisierung der tragbaren Funkeinheit zu ermöglichen.

Gemäß einer weiteren Ausgestaltung befindet sich die fahrzeugseitige Position im Außenbereich des Fahrzeugs in der Nähe der fahrzeugseitigen Position im Bereich des Fahrzeugs. Insbesondere ist es möglich, dass sich die beiden Positionen im Dachbereich der Fahrzeugkarosserie befinden, wobei sie dort durch die Karosserie voneinander getrennt sind. Es ist auch möglich, dass sich die beiden Positionen in bzw. an der Fahrzeugtür befinden, wobei sie dort wieder durch das Karosseriematerial, genauer gesagt durch das Blech der Tür, voneinander getrennt sind. So ist es denkbar, dass beispielsweise das erste Funksignal von einer Außenantenne als erste fahrzeugseitige Funkeinrichtung (im Dachbereich, Türbereich, etc.) ausgesendet wird, während das zweite Funksignal von einer Innenantenne als zweite fahrzeugseitige Funkeinrichtung gesendet wird, wobei die beiden Antennen lediglich durch die jeweiligen Teil der Karosserie voneinander getrennt sind, jedoch ansonsten vorteilhafterweise einander gegenüberliegen. Auf diese Weise wird weiter eine gute Unterscheidungsmöglichkeit bezüglich der Empfangsfeldstärke des ersten und des zweiten Funksignals geschaffen, da dadurch sichergestellt wird, dass eine Dämpfung des einen Funksignals gegenüber dem anderen Funksignal erreicht wird.

Gemäß einer weiteren Ausgestaltung wird ein Ort der tragbaren Funkeinheit im Außenbereich des Fahrzeugs ermittelt, wenn der Vergleich der jeweiligen gemessenen Empfangsfeldstärke ergibt, dass der Wert der gemessenen Empfangsfeldstärke des ersten Funksignals größer als der Wert der gemessenen Empfangsfeldstärke des zweiten Funksignals ist. Entsprechend kann der Ort der tragbaren Funkeinheit im Innenbereich des Fahrzeugs ermittelt werden, wenn der Vergleich der Werte der jeweiligen gemessenen Empfangsfeldstärken ergibt, dass der Wert der gemessenen Empfangsfeldstärke des zweiten Funksignals größer ist, als der Wert der gemessenen Empfangsfeldstärke des ersten Funksignals ist. Auf diese Weise wird eine einfache Möglichkeit der Innenbereichs-/Außenbereichsunterscheidung geschaffen.

Erfindungsgemäss handelt es sich bei dem ersten und dem zweiten Funksignal um ein Hochfrequenzsignal. Es kann sich dabei um ein Signal im MHz-Bereich, wie beispielsweise im Bereich von 433 MHz handeln, jedoch auch um ein Signal im GHz-Bereich, wie beispielsweise in einem Bluetooth-Frequenzband (auch Bluetooth low energy-Frequenzband) im Bereich von 2,4 GHz oder 5 GHz. Insbesondere bei einer Verwendung einer gemäß dem Bluetooth-Standard benutzten Frequenz ist es denkbar, dass die tragbare Funkeinheit als ein von einem Benutzer mitführbares Gerät, wie beispielsweise ein Smartphone (intelligentes Telefon), eine Smartcard (intelligente Karte), eine Smartwatch (intelligente Uhr) oder als ein entsprechender Funkschlüssel ausgebildet ist, das auf einer entsprechenden Bluetooth-Frequenz kommunizieren kann.

Gemäß einem weiteren Aspekt der Erfindung wird eine Anordnung zum Lokalisieren einer tragbaren Funkeinheit innerhalb eines vorbestimmten Bereiches bzw. Erfassungsbereichs eines Fahrzeugs geschaffen, die folgende Merkmale umfasst. Sie hat eine erste fahrzeugseitige Funkeinrichtung zum Aussenden eines ersten Funksignals von einer Position im Außenbereich des Fahrzeugs. Ferner hat sie eine zweite fahrzeugseitige Funkeinrichtung zum Aussenden eines zweiten Funksignals von einer Position im Innenbereich des Fahrzeugs. Überdies hat sie eine fahrzeugseitige Empfangseinrichtung zum Empfangen von Werten der jeweiligen gemessenen Empfangsfeldstärken des ersten und des zweiten Funksignals am Ort der tragbaren Funkeinheit oder von einem oder mehreren daraus abgeleiteten Werten. Überdies hat sie eine Auswerteeinrichtung zum Ermitteln des Orts der tragbaren Funkeinheit anhand eines Vergleichs der Werte der jeweiligen gemessenen Empfangsfeldstärken. Somit wird eine Anordnung zum Lokalisieren einer tragbaren Funkeinheit geschaffen, die auf einfache Weise realisierbar ist und auch für hochfrequente Funksignale ausgelegt ist, da hier gezielt eine Abschirmung von Funksignalen auch durch Reflexionen an der Fahrzeugkarosserie dazu genutzt wird, durch Vergleich der Empfangsfeldstärken eines Funksignals aus dem Außenbereich und eines Funksignals aus dem Innenbereich die Ortsbestimmung vorzunehmen.

Gemäß einer Ausgestaltung der Anordnung weist diese ferner eine tragbare Funkeinheit mit folgenden Merkmalen auf. Eine tragbare Funkeinheit hat dabei eine funkeinheitsseitige Empfangseinrichtung zum Empfangen des ersten und des zweiten Funksignals, sowie zum Messen der Empfangsfeldstärke des ersten und des zweiten Funksignals am Ort der tragbaren Funkeinheit. Ferner hat sie eine funkeinheitsseitige Sendeeinrichtung zum Aussenden der jeweiligen gemessenen Empfangsfeldstärken des ersten und des zweiten Funksignals. Es ist auch denkbar, dass die funkeinheitsseitige Sendeeinrichtung einen aus den jeweiligen gemessenen Empfangsfeldstärken des ersten und des zweiten Funksignals abgeleiteten Wert oder abgeleitete Werte aussendet. Beispielsweise kann eine Differenz der Empfangsfeldstärken des ersten und des zweiten Funksignals ausgesendet werden.

Gemäß einem weiteren Aspekt der Erfindung wird ein Fahrzeug mit einer obigen Anordnung oder einer Ausgestaltung hiervon geschaffen.

Gemäße einer Ausgestaltung des Fahrzeugs weist dieses einen Außenbereich sowie einen Innenbereich auf. Außerdem hat es eine Karosserie, die den Außenbereich vom Innenbereich trennt, wobei die ersten fahrzeugseitige Funkeinrichtung an der Außenseite der Karosserie und die zweite fahrzeugseitige Funkeinrichtung an der Innenseite der Karosserie, insbesondere jeweils im Dachbereich oder im Türbereich angeordnet sind. Auf diese Weise wird eine gute Unterscheidungsmöglichkeit der Empfangsfeldstärke des Funksignals von der ersten fahrzeugseitigen Funkeinrichtung an der Außenseite der Karosserie und des Funksignals von der zweiten fahrzeugseitigen Funkeinrichtung an der Innenseite der Karosserie ermöglicht.

Vorteilhafte Ausgestaltungen des Verfahrens sind, soweit auf die Anordnungen des Fahrzeugs anwendbar auch als vorteilhafte Ausgestaltungen der Anordnungen des Fahrzeugs zu sehen, und umgekehrt.

Im Folgenden sollen nun beispielhafte Ausführungsformen der vorliegenden Erfindung bezugnehmend auf die beiliegenden Zeichnungen erläutert werden. Es zeigen:
- Figur 1: eine schematische Darstellung einer Anordnung zum Lokalisieren einer tragbaren Funkeinheit im Erfassungsbereich eines Fahrzeugs gemäß einer Ausführungsform der Erfindung;
- Figur 2: ein Ablaufdiagramm zum Darstellen des Verfahrens zum Lokalisieren einer tragbaren Einheit gemäß einer Ausführungsform der Erfindung.

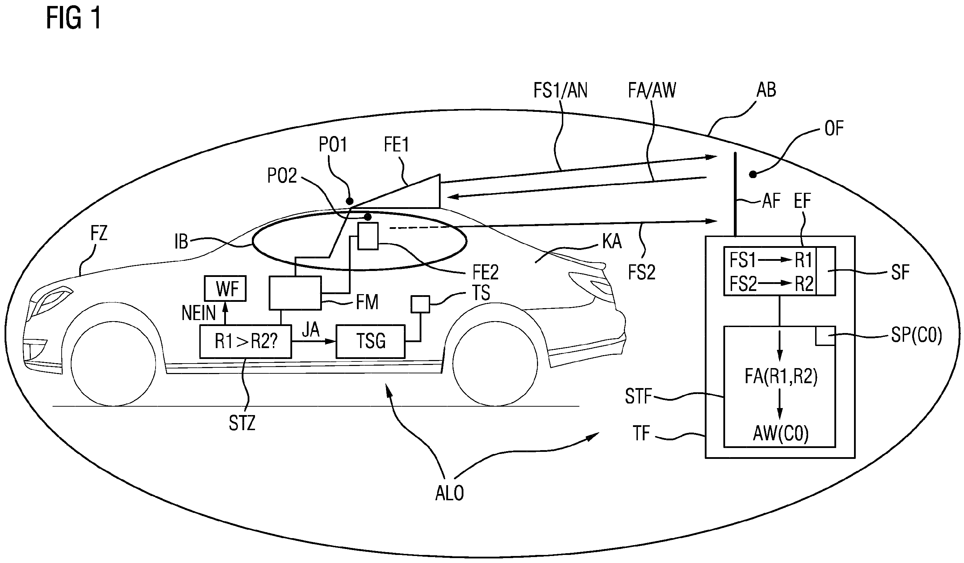

Es sei nun auf Figur 1 verwiesen, in der eine Anordnung ALO zum Lokalisieren mit ihren wesentlichen Komponenten gemäß einer Ausführungsform der Erfindung gezeigt ist. Dabei hat die Anordnung ALO mehrere Komponenten, die fahrzeugseitig bzw. in oder an einem Fahrzeug FZ angeordnet sind. Zu diesen zählen eine erste fahrzeugseitige Funkeinrichtung FE1, die an einer ersten Position PO1 in einem Außenbereich AB des Fahrzeugs FZ, hier auf einem Dach des Fahrzeugs FZ angeordnet ist. Diese erste fahrzeugseitige Funkeinrichtung FE1 ist dazu eingerichtet, ein oder mehrere Funksignale FS1 von der Position PO1 im Außenbereich des Fahrzeugs auszusenden. Desweiteren umfasst die Anordnung ALO eine zweite fahrzeugseitige Funkeinrichtung FE2, die an einer zweiten Position PO2 in einem Innenbereich IB des Fahrzeugs, hier der Fahrgastzelle angeordnet ist. Dabei ist die zweite fahrzeugseitige Funkeinrichtung FE2 zum Aussenden eines oder mehrerer zweiter Funksignale von der Position PO2 im Innenbereich des Fahrzeugs eingerichtet. Die fahrzeugseitige Funkeinrichtung FE2 kann dabei am Dachhimmel des Fahrzeugs FZ angeordnet sein. Insbesondere befinden sich die beiden fahrzeugseitigen Funkeinrichtungen in unmittelbarer Nähe zueinander, wie in Figur 1 lediglich durch die Karosserie im Dachbereich des Fahrzeugs getrennt, um zuverlässige Ergebnisse bei der Lokalisierung, insbesondere der Innenbereich-/ Außenbereichsunterscheidung liefern zu können.

Die fahrzeugseitigen Funkeinrichtungen können dabei Antennen aufweisen, die dafür ausgelegt sind, Hochfrequenzsignale auszusenden, insbesondere in einem Bluetooth-Frequenzband bei 2,4 GHz. Die beiden fahrzeugseitigen Funkeinrichtungen FE1 und FE2 sind mit einem fahrzeugseitigen Funkmodul FM verbunden, das dafür ausgelegt ist, die beiden fahrzeugseitigen Funkeinrichtungen anzusteuern bzw. zu treiben, damit diese ihre Funksignale FS1 bzw. FS2 aussenden. Desweiteren ist das Funkmodul FM dazu eingerichtet, Funksignale zu empfangen, wie beispielsweise ein Funksignal FA, das von einer später näher zu erläuternden tragbaren Funkeinheit TF ausgesendet wird. Das Funksignal FA kann dann entweder über die erste fahrzeugseitige Funkeinrichtung FE1 oder die zweite fahrzeugseitige Funkeinrichtung FE2 empfangen und zum Funkmodul FM weitergeleitet werden. Bei dem Funksignal FA kann es sich auch um ein Hochfrequenzsignal handeln, insbesondere in einem Bluetooth-Frequenzband bei 2, 4 GHz. Das Funkmodul FM ist desweiterein mit einer fahrzeugseitigen Steuereinrichtung STZ verbunden, die zum Auswerten der in dem Funksignal FA enthaltenen Informationen ausgelegt ist.

Neben diesen fahrzeugseitigen Komponenten der Anordnung ALO umfasst diese ferner eine tragbare Funkeinheit TF. Diese hat eine funkeinheitsseitige Empfangseinrichtung EF zum Empfangen des ersten und des zweiten Funksignals FS1 und FS2, sowie zum Messen der Empfangsfeldstärke R1 des ersten Funksignals FS1 und zum Messen der Empfangsfeldstärke R2 des zweiten Funksignals FS2 am Ort OF der tragbaren Funkeinheit TF. Die funkeinheitsseitige Empfangseinrichtung EF ist mit einer funkeinheitsseitigen Steuereinrichtung STF verbunden, die die beiden erhaltenen Werte R1 und R2 der gemessenen Empfangsfeldstärken in das Funksignal FA packt und über eine funkeinheitsseitige Sendeeinrichtung SF und die funkeinheitsseitige Antenne AF aussendet bzw. zum Fahrzeug zurücksendet.

Es sei noch einmal verwiesen auf die fahrzeugseitige Steuereinrichtung STZ, deren Aufgabe es ist, den Ort OF der tragbaren Funkeinheit TF zu ermitteln. Dabei vergleicht die fahrzeugseitige Steuereinrichtung STZ die beiden Werte R1 und R2 der jeweiligen gemessenen Empfangsfeldstärken der Funksignale FS1 und FS2. Ist der Wert R1 der Empfangsfeldstärke des ersten Funksignals größer als der Wert R2 der gemessenen Empfangsfeldstärke des zweiten Funksignals FS2, so bedeutet dies, dass sich die tragbare Funkeinheit TF im Außenbereich AB des Fahrzeugs befindet, da das Funksignal FS2 ungehindert zur funkeinheitsseitigen Antenne AF gelangen konnte, im Gegensatz zum zweiten Funksignal FS2 der zweiten fahrzeugseitigen Funkeinrichtung FE2, das sich zunächst ungehindert im Innenbereich IB des Fahrzeugs ausgebreitet hat (dargestellt durch die etwa dicker dargestellte gestrichelte Linie), und dann durch die Fahrzeugkarosserie KA gedämpft eine geringere Feldstärke aufweist (dargestellt durch die weiterführende dünnere Linie mit Pfeil bzgl. des Signals FS2). Entsprechend wird der Wert R2 der gemessenen Empfangsfeldstärke am Ort OF der tragbaren Funkeinheit TF geringer sein als die gemessene Feldstärke R1 des ersten Funksignals FS1. Entsprechend ist auch der Pfeil des Funksignals FS1 hier etwas dicker dargestellt, als der Pfeil des Funksignals FS2 nach Dämpfung durch die Fahrzeugkarosserie.

Wurde wie oben gerade erläutert, festgestellt, dass sich der Ort OF der tragbaren Funkeinheit TF im Außenbereich des Fahrzeugs befindet, so kann die fahrzeugseitige Steuereinrichtung STZ die entsprechenden Fahrzeugfunktionen auslösen. Aus der Lokalisierung im Außenbereich AB des Fahrzeugs FZ kann geschlossen werden, dass ein Fahrer oder Benutzer (nicht dargestellt) durch Authentifizieren mit seiner tragbaren Funkeinheit TF Zugang zum Fahrzeug erlangen möchte, sodass bei der Lokalisierung im Außenbereich die fahrzeugseitige Steuereinrichtung STZ an ein Türsteuergerät TSG ein entsprechendes Signal ausgibt, damit dieses ein Entriegeln eines Türschlosses TS veranlasst.

Wird die tragbare Funkeinheit TF hingegen im Innenbereich IB des Fahrzeugs FZ, d. h. in der Fahrgastzelle lokalisiert, wobei der Wert R2 der gemessenen Empfangsfeldstärke des zweiten Funksignals FS2 größer als der Wert R1 der gemessenen Empfangsfeldstärke des ersten Funksignals FS1 ist, so ist damit zu rechnen, dass ein die tragbare Funkeinheit TF mitführender Fahrer den Antriebsmotor des Fahrzeugs starten möchte, sodass in diesem Fall eine Wegfahrsperre WF durch ein entsprechendes Signal gelöst wird.

Bei der tragbaren Funkeinheit TF kann es sich hierbei beispielsweise um einen herkömmlichen Funkschlüssel, jedoch auch um einen persönlichen von einem Benutzer bzw. Fahrer mitführbaren tragbaren Gegenstand handeln, wie ein Smartphone, eine Smartwatch, smart glasses (eine intelligente Brille), jeweils ausgestattet mit einer entsprechenden Funkschnittstelle bzw. einer entsprechenden funkeinheitsseitigen Empfangseinrichtung EF und einer funkeinheitsseitigen Sendeeinrichtung SF zum Austauschen der genannten Funksignale mit dem Fahrzeug FZ.

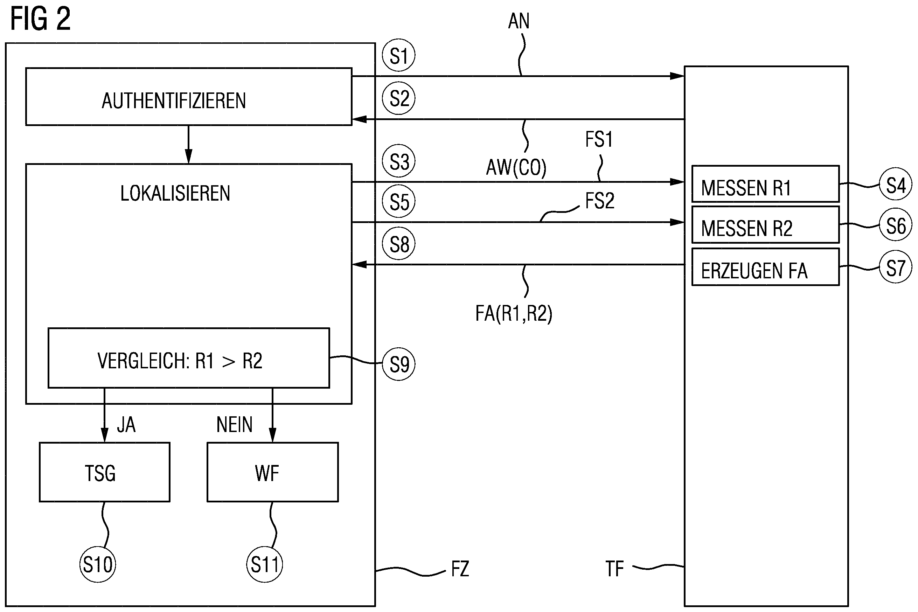

Es sei nun auf Figur 2 verwiesen, in der ein zum Entriegeln einer Fahrzeugtür bzw. zum Freigeben einer Wegfahrsperre mit einem Verfahren zum Lokalisieren einer tragbaren Einheit gemäß einer Ausführungsform der Erfindung gezeigt ist.

Dabei wird davon ausgegangen, dass sich ein Fahrer bzw. Benutzer (nicht dargestellt) mit seiner tragbaren Funkeinheit TF dem Fahrzeug FZ nähert. Das Fahrzeug FZ bzw. das Funkmodul FM sendet über die erste und/oder zweite fahrzeugseitige Funkeinrichtung FE1 bzw. FE2 in regelmäßigen Zeitabständen Funksignale AN aus. Nähert sich die tragbare Funkeinheit TF derart dem Fahrzeug, dass sie in den Erfassungsbereich des Fahrzeugs kommt, d. h. dass insbesondere ein erstes Funksignal FS1 von der tragbaren Funkeinheit TF empfangen werden kann, so soll nun der in Figur 2 dargestellte Ablauf beginnen. Es wird folglich angenommen, dass sich, wie es in Figur 1 dargestellt ist, die tragbare Funkeinheit TF innerhalb des Erfassungsbereichs des Fahrzeugs FZ befindet, dieser kann hier auch mit dem in Figur 1 dargestellten Außenbereich AB zur Veranschaulichung gleichgesetzt werden.

In einem Schritt S1 wird dabei von der ersten fahrzeugseitigen Funkeinrichtung FE1 ein Funksignal, in diesem Fall als ein Anfragesignal AN bezeichnet, von der ersten fahrzeugseitigen Funkeinrichtung FE1 zur tragbaren Funkeinheit TF gesendet. Durch dieses Anfragesignal AN wird die tragbare Funkeinheit TF bzw. deren Komponenten aufgeweckt, wobei durch den Empfang des Anfragesignals AN über die funkeinheitsseitige Antenne AF und die funkeinheitsseitige Empfangseinrichtung EF die funkeinheitsseitige Steuereinrichtung STF dazu veranlasst wird, einen in einem Speicher SP gespeicherten Code CO in ein Antwortsignal AW zu packen. Entsprechend veranlasst die funkeinheitsseitige Steuereinrichtung STF die funkeinheitsseitige Sendeeinrichtung SF das Antwortsignal mit dem Code CO über die funkeinheitsseitige Antenne AF in Schritt S2 zum Fahrzeug zu senden. Entspricht der übertragene Code CO einem im Fahrzeug bzw. in der fahrzeugseitigen Steuereinrichtung STZ gespeicherten vorbestimmten Code, so ist die Authentifizierung der tragbaren Funkeinheit TF gegenüber dem Fahrzeug FZ positiv verlaufen und der Ablauf wird mit der Lokalisierung der tragbaren Funkeinheit fortgesetzt.

Wie es bereits bezüglich Figur 1 kurz angedeutet wurde, beginnt nun die Lokalisierung der tragbaren Funkeinheit TF mit dem Aussenden eines ersten Funksignals FS1 durch die erste fahrzeugseitige Funkeinrichtung FE1 in Schritt S3. In Schritt S4 wird am Ort OF der tragbaren Funkeinheit TF die Empfangsfeldstärke gemessen und ein entsprechender Wert R1 bestimmt. Desweiteren wird zeitlich versetzt zum Aussenden des ersten Funksignals FS1 in Schritt S5 das zweite Funksignal FS2 von der zweiten fahrzeugseitigen Funkeinrichtung FE2 ausgesendet. Auch bezüglich diesem wird am Ort OF der tragbaren Funkeinrichtung TF die Empfangsfeldstärke gemessen und ein entsprechender Wert R2 in Schritt S6 bestimmt. In einem Schritt S7 wird dann von der funkeinheitsseitigen Steuereinrichtung STF ein Funksignal FA als Antwortsignal erzeugt, in dem die beiden Werte R1 und R2 enthalten sind. Es ist dabei auch denkbar, anstelle der Werte selbst, einen Differenzwert von R1 und R2 beispielsweise einen Wert R1 - R2 in das Signal FA zu packen und in einem Schritt S8 zurück zum Fahrzeug zu senden.

Nach diesem ersten Teil der Lokalisierung, bei dem Funksignale zwischen dem Fahrzeug FZ und der tragbaren Funkeinheit TF ausgetauscht worden sind, beginnt nun die Auswertung. In einem Schritt S9 werden dabei die von der tragbaren Funkeinheit TF übermittelten Werte R1 und R2 miteinander verglichen. Dabei prüft die fahrzeugseitige Steuereinrichtung STZ beispielsweise, ob der Wert R1 größer als der Wert R2 ist. Ist dies der Fall, so kann darauf geschlossen werden, dass sich die tragbare Funkeinheit TF im Außenbereich des Fahrzeugs befindet, da das erste Funksignal FS1, das die tragbare Funkeinheit TF erreichen konnte im Gegensatz zum zweiten Funksignal FS2 nicht durch die Karosserie gedämpft worden ist. Entsprechend wird die fahrzeugseitige Steuereinrichtung STZ an das Türsteuergerät TSG ein entsprechendes Signal aussenden, damit dieses beispielsweise ein Türschloss TS entriegelt, um den Benutzer der tragbaren Einheit TF Zugang zum Fahrzeug zu gewähren.

Kommt beim Vergleich von Schritt S9 heraus, dass der Wert R2 größer als der Wert R1 ist, beispielsweise weil der Benutzer der tragbaren Funkeinrichtung TF mit dieser mittlerweile im Fahrzeug sitzt, und im Innenbereich IB das erste Funksignal durch die Fahrzeugkarosserie gedämpft wird, so wird dies als Zeichen gedeutet, dass der Fahrer bzw. Benutzer mit dem Fahrzeug fahren möchte und entsprechend seinen Antriebsmotor starten möchte. Entsprechend wird dann in einem Schritt S11 eine Wegfahrsperre WF freigegeben.

Vorteilhafterweise wird für eine zuverlässige Lokalisierung der tragbaren Funkeinheit TF bzw. für eine zuverlässige Innenbereich-/ Außenbereichsunterscheidung die erste fahrzeugseitige Funkeinrichtung FE1 und die zweite fahrzeugseitige Funkeinrichtung FE2 in unmittelbarer Nähe angeordnet. Desweiteren liegen die Sendefeldstärke des ersten Funksignals FS1 und des zweiten Funksignals FS2 in der gleichen dezimalen Größenordnung, und sind insbesondere gleichgroß. Durch die Verwendung von zwei Funksignalen, eines aus dem Innenbereich und das andere aus dem Außenbereich und durch den Vergleich der beiden Empfangsfeldstärken am Ort einer tragbaren Funkeinheit ist es somit möglich, hochfrequente Funksignale verwenden zu können.

## Patentansprüche

1. Verfahren zum Lokalisieren einer tragbaren Funkeinheit (TF) innerhalb eines vorbestimmten Bereichs eines Fahrzeugs (FZ), mit folgenden Schritten:
Aussenden (S3) eines ersten Funksignals (FS1) als ein Hochfrequenzsignal von einer fahrzeugseitigen Position (PO1) im Außenbereich des Fahrzeugs (FZ);
Aussenden (S5) eines zweiten Funksignals (FS2) als ein Hochfrequenzsignal von einer fahrzeugseitigen Position (PO2) im Innenbereich des Fahrzeugs;
Empfangen (S8) von Werten (R1, R2) der jeweiligen gemessenen Empfangsfeldstärken des ersten und des zweiten Funksignals (FS1, FS2) am Ort (OF) der tragbaren Funkeinheit oder eines davon abgeleiteten Wertes;
Ermitteln (S9) des Ortes (OF) der tragbaren Funkeinheit (TF) anhand eines Vergleichs der Werte (R1, R2) der jeweiligen gemessenen Empfangsfeldstärken.

2. Verfahren nach Anspruch 1, bei dem die jeweilige Sendefeldstärke des ersten und des zweiten Funksignals (FS1, FS2) in dergleichen dezimalen Größenordnung liegen, und insbesondere identisch sind.

3. Verfahren nach Anspruch 1 oder 2, bei dem die fahrzeugseitige Position (PO1) im Außenbereich des Fahrzeugs in der Nähe der fahrzeugseitigen Position (PO2) im Innenbereich des Fahrzeugs (FZ) ist.

4. Verfahren nach einem der Ansprüche 1 bis 3, bei dem ein Ort (OF) der tragbaren Funkeinheit (TF) im Außenbereich des Fahrzeugs ermittelt wird, wenn der Vergleich der Werte der jeweiligen gemessenen Empfangsfeldstärken ergibt, dass der Wert (R1) der gemessenen Empfangsfeldstärke des ersten Funksignals (FS1) größer als der Wert (R2) der gemessenen Empfangsfeldstärke des zweiten Funksignals (FS2) ist.

5. Verfahren nach einem der Ansprüche 1 bis 4, bei dem ein Ort (OF) der tragbaren Funkeinheit (TF) im Innenbereich (IB) des Fahrzeugs ermittelt wird, wenn der Vergleich der Werte der jeweiligen gemessenen Empfangsfeldstärke ergibt, dass der Wert (R2) der gemessenen Empfangsfeldstärke des zweiten Funksignals (FS2) größer als der Wert (R1) der gemessenen Empfangsfeldstärke des ersten Funksignals (FS1) ist.

6. Anordnung (ALO) zum Lokalisieren einer tragbaren Funkeinheit (TF) innerhalb eines vorbestimmten Bereichs eines Fahrzeugs (FZ) mit folgenden Merkmalen:
einer ersten fahrzeugseitigen Funkeinrichtung (FE1) zum Aussenden eines ersten Funksignals als ein Hochfrequenzsignal von einer Position (PO1) im Außenbereich (AB) des Fahrzeugs (FZ);
einer zweiten fahrzeugseitigen Funkeinrichtung (FE2) zum Aussenden eines zweiten Funksignals (FS2) als ein Hochfreguenzsignal von einer Position (PO2) im Innenbereich (IB) des Fahrzeugs (FZ);
einer fahrzeugseitigen Empfangseinrichtung (FE1, FE2; FM) zum Empfangen von Werten (R1, R2) der jeweiligen gemessenen Empfangsfeldstärken des ersten und des zweiten Funksignals (FS1, FS2) am Ort (OF) der tragbaren Funkeinheit (TF);
einer Auswerteeinrichtung (STZ) zum Ermitteln des Orts (OF) der tragbaren Funkeinheit (TF) anhand eins Vergleichs der Werte (R1, R2) der jeweiligen gemessenen Empfangsfeldstärken.

7. Anordnung nach Anspruch 6, die ferner eine tragbare Funkeinheit mit folgenden Merkmalen aufweist:
einer funkeinheitsseitigen Empfangseinrichtung (EF) zum Empfangen des ersten und des zweiten Funksignals (FS1, FS2), sowie zum Messen der Empfangsfeldstärke des ersten und des zweiten Funksignals (FS1, FS2) am Ort der tragbaren Funkeinheit (TF);
einer funkeinheitsseitigen Sendeeinrichtung (SF) zum Aussenden der Werte (R1, R2) der jeweiligen gemessenen Empfangsfeldstärken des ersten und des zweiten Funksignals (FS1, FS2) oder eines daraus abgeleiteten Wertes.

8. Fahrzeug (FZ) mit einer Anordnung (ALO) nach einem der Ansprüche 6 oder 7.

9. Fahrzeug nach Anspruch 8, das aufweist:
einen Außenbereich (AB);
einen Innenbereich (IB);
eine Karosserie, die den Außenbereich (AB) von dem Innenbereich (IB) trennt, wobei die erste fahrzeugseitige Funkeinrichtung (FE1) an der Außenseite der Karosserie (KA) und die zweite fahrzeugseitige Funkeinrichtung (FE2) an der Innenseite der Karosserie angeordnet ist.

10. Fahrzeug nach Anspruch 9,
bei dem die erste fahrzeugseitige Funkeinrichtung (FE1) und die zweite fahrzeugseitige Funkeinrichtung (FE2) jeweils im Dachbereich angeordnet sind.

## Claims

1. Method for locating a portable radio unit (TF) within a predetermined area of a vehicle (FZ), having the following steps:
transmitting (S3) a first radio signal (FS1) as a radio-frequency signal from a vehicle-based position (PO1) outside the vehicle (FZ);
transmitting (S5) a second radio signal (FS2) as a radio-frequency signal from a vehicle-based position (PO2) inside the vehicle;
receiving (S8) values (R1, R2) of the respective measured reception field strengths of the first and second radio signals (FS1, FS2) at the location (OF) of the portable radio unit or a value derived therefrom;
ascertaining (S9) the location (OF) of the portable radio unit (TF) on the basis of a comparison of the values (R1, R2) of the respective measured reception field strengths.

2. Method according to Claim 1, in which the respective transmission field strength of the first and second radio signals (FS1, FS2) are in the same decimal order of magnitude, and in particular are identical.

3. Method according to Claim 1 or 2, in which the vehicle-based position (PO1) outside the vehicle is close to the vehicle-based position (PO2) inside the vehicle (FZ).

4. Method according to one of Claims 1 to 3, in which a location (OF) of the portable radio unit (TF) outside the vehicle is ascertained if the comparison of the values of the respective measured reception field strengths reveals that the value (R1) of the measured reception field strength of the first radio signal (FS1) is greater than the value (R2) of the measured reception field strength of the second radio signal (FS2).

5. Method according to one of Claims 1 to 4, in which a location (OF) of the portable radio unit (TF) inside (IB) the vehicle is ascertained if the comparison of the values of the respective measured reception field strength reveals that the value (R2) of the measured reception field strength of the second radio signal (FS2) is greater than the value (R1) of the measured reception field strength of the first radio signal (FS1).

6. Arrangement (ALO) for locating a portable radio unit (TF) within a predetermined area of a vehicle (FZ), having the following features:
a first vehicle-based radio device (FE1) for transmitting a first radio signal as a radio-frequency signal from a position (PO1) outside (AB) the vehicle (FZ);
a second vehicle-based radio device (FE2) for transmitting a second radio signal (FS2) as a radio-frequency signal from a position (PO2) inside (IB) the vehicle (FZ);
a vehicle-based reception device (FE1, FE2; FM) for receiving values (R1, R2) of the respective measured reception field strengths of the first and second radio signals (FS1, FS2) at the location (OF) of the portable radio unit (TF);
an evaluation device (STZ) for ascertaining the location (OF) of the portable radio unit (TF) on the basis of a comparison of the values (R1, R2) of the respective measured reception field strengths.

7. Arrangement according to Claim 6, which further has a portable radio unit having the following features:
a radio-unit-based reception device (EF) for receiving the first and second radio signals (FS1, FS2), and for measuring the reception field strength of the first and second radio signals (FS1, FS2) at the location of the portable radio unit (TF);
a radio-unit-based transmission device (SF) for transmitting the values (R1, R2) of the respective measured reception field strengths of the first and second radio signals (FS1, FS2) or a value derived therefrom.

8. Vehicle (FZ) having an arrangement (ALO) according to either of Claims 6 and 7.

9. Vehicle according to Claim 8, which has:
an outside (AB);
an inside (IB);
a bodywork that separates the outside (AB) from the inside (IB), wherein the first vehicle-based radio device (FE1) is arranged on the outside of the bodywork (KA) and the second vehicle-based radio device (FE2) is arranged on the inside of the bodywork.

10. Vehicle according to Claim 9,
in which the first vehicle-based radio device (FE1) and the second vehicle-based radio device (FE2) are arranged in the roof area in each case.

## Revendications

1. Procédé de localisation d'une unité radio portable (TF) à l'intérieur d'une zone prédéterminée d'un véhicule (FZ), comprenant les étapes suivantes consistant à :
émettre (S3) un premier signal radio (FS1) sous la forme d'un signal de radiofréquence à partir d'une position côté véhicule (PO1) à l'extérieur du véhicule (FZ) ;
émettre (S5) un deuxième signal radio (FS2) sous la forme d'un signal de radiofréquence à partir d'une position côté véhicule (PO2) à l'intérieur du véhicule ;
recevoir (S8) des valeurs (R1, R2) des intensités de champ de réception mesurées respectives du premier et du deuxième signal radio (FS1, FS2) à l'emplacement (OF) de l'unité radio portable ou une valeur dérivée de celles-ci ;
déterminer (S9) l'emplacement (OF) de l'unité radio portable (TF) à l'aide d'une comparaison des valeurs (R1, R2) des intensités de champ de réception mesurées respectives.

2. Procédé selon la revendication 1, dans lequel les intensités de champ d'émission du premier et du deuxième signal radio (FS1, FS2) sont d'un même ordre de grandeur décimal, et sont en particulier identiques.

3. Procédé selon la revendication 1 ou 2, dans lequel la position côté véhicule (PO1) à l'extérieur du véhicule se trouve à proximité de la position côté véhicule (PO2) à l'intérieur du véhicule (FZ).

4. Procédé selon l'une quelconque des revendications 1 à 3, dans lequel un emplacement (OF) de l'unité radio portable (TF) est déterminé à l'extérieur du véhicule si le résultat de la comparaison des valeurs des intensités de champ de réception mesurées respectives indique que la valeur (R1) de l'intensité de champ de réception mesurée du premier signal radio (FS1) est supérieure à la valeur (R2) de l'intensité de champ de réception mesurée du deuxième signal radio (FS2).

5. Procédé selon l'une quelconque des revendications 1 à 4, dans lequel un emplacement (OF) de l'unité radio portable (TF) à l'intérieur (IB) du véhicule est déterminé si le résultat de la comparaison des valeurs de l'intensité de champ de réception mesurée respective indique que la valeur (R2) de l'intensité de champ de réception mesurée du deuxième signal radio (FS2) est supérieure à la valeur (R1) de l'intensité de champ de réception mesurée du premier signal radio (FS1).

6. Agencement (ALO) de localisation d'une unité radio portable (TF) à l'intérieur d'une zone prédéterminée d'un véhicule (FZ) ayant les particularités suivantes :
un premier dispositif radio côté véhicule (FE1) pour émettre un premier signal radio sous la forme d'un signal de radiofréquence à partir d'une position (PO1) à l'extérieur (AB) du véhicule (FZ) ;
un deuxième dispositif côté véhicule (FE2) pour émettre un deuxième signal radio (FS2) sous la forme d'un signal de radiofréquence à partir d'une position (PO2) à l'intérieur (IB) du véhicule (FZ) ;
un dispositif de réception côté véhicule (FE1, FE2 ; FM) pour recevoir des valeurs (R1, R2) des intensités de champ de réception mesurées respectives du premier et du deuxième signal radio (FS1, FS2) à l'emplacement (OF) de l'unité radio portable (TF) ;
un dispositif d'évaluation (STZ) pour déterminer l'emplacement (OF) de l'unité radio portable (TF) à l'aide d'une comparaison des valeurs (R1, R2) des intensités de champ de réception mesurées respectives.

7. Agencement selon la revendication 6, présentant en outre une unité radio portable, ayant les particularités suivantes :
un dispositif de réception côté unité radio (EF) pour recevoir le premier et le deuxième signal radio (FS1, FS2), ainsi que pour mesurer l'intensité de champ de réception du premier et du deuxième signal radio (FS1, FS2) à l'emplacement de l'unité radio portable (TF) ;
un dispositif d'émission côté unité radio (SF) pour émettre les valeurs (R1, R2) des intensités de champ de réception mesurées respectives du premier et du deuxième signal radio (FS1, FS2) ou une valeur dérivée de celles-ci.

8. Véhicule (FZ) comprenant un agencement (ALO) selon l'une quelconque des revendications 6 et 7.

9. Véhicule selon la revendication 8, présentant :
un extérieur (AB) ;
un intérieur (IB) ;
une carrosserie qui sépare l'extérieur (AB) de l'intérieur (IB), le premier dispositif radio côté véhicule (FE1) étant disposé sur la face extérieure de la carrosserie (KA), et le deuxième dispositif radio côté véhicule (FE2) étant disposé sur la face intérieure de la carrosserie.

10. Véhicule selon la revendication 9, dans lequel le premier dispositif radio côté véhicule (FE1) et le deuxième dispositif radio côté véhicule (FE2) sont respectivement disposés au niveau du toit.
